# FASCICULE DE BREVET EUROPEEN

(11) **EP 4 047 235 B1**
(45) Date de publication et mention de la délivrance du brevet: **24.07.2024**
(21) Numéro de dépôt: 22156030.3
(22) Date de dépôt: 10.02.2022
(51) Int. Cl.: F16D 23/02, F16D 23/04, F16D 25/0638, F16D 67/04, F16H 3/12, F16D 23/06

(54) **MODULE POUR UN SYSTEME DE SYNCHRONISATION ET D'ENTRAINEMENT D'UN ARBRE INTERMEDIAIRE D'UNE BOITE DE TRANSMISSION**
MODUL FÜR EIN SYSTEM ZUR SYNCHRONISATION UND ZUM ANTRIEB EINER ZWISCHENWELLE EINES GETRIEBES
MODULE FOR A SYSTEM FOR SYNCHRONISING AND DRIVING AN INTERMEDIATE SHAFT OF A GEARBOX

(30) Priorité: 22.02.2021 FR 2101674
(43) Date de publication de la demande: 24.08.2022
(73) Titulaire: VALEO EMBRAYAGES, 80009 Amiens (FR)
(72) Inventeur: VASSIEUX, Loic, 80000 Amiens (FR); LHEUREUX, Dominique, 80000 Amiens (FR)
(74) Mandataire: Valeo Powertrain Systems

(56) Documents cités:
- IT-A1- 201800 007 576
- JP-A- H07 167 278
- US-A- 3 478 851

## Description

### Domaine technique

L'invention se rapporte au domaine des transmissions de véhicule et concerne plus particulièrement un module pour un système de synchronisation et d'entraînement d'un arbre intermédiaire d'une boîte de transmission ainsi qu'un procédé de pilotage d'un tel système de synchronisation et d'entraînement.

### Arrière-plan technologique

Il est connu des boîtes de transmission de véhicule comportant un arbre primaire destiné à être entraîné par un moteurthermique du véhicule, un arbre secondaire destiné à entraîner des roues motrices du véhicule et un arbre intermédiaire apte à être accouplé à l'arbre de sortie et à l'arbre d'entrée par des trains d'engrenage correspondant à différents rapports de vitesses.

Le document WO04013517 enseigne d'utiliser un frein de boîte accouplé à l'arbre intermédiaire de la boîte de transmission pourfreiner l'arbre intermédiaire lors des phases transitoires de changement de rapport de vitesse, ce qui permet de favoriser la synchronisation de la boîte de transmission et ainsi de diminuer la durée des phases transitoires de changement de rapport de vitesse.

Les documents GB1435517 et AT520019 divulguent une machine électrique réversible qui est accouplée de façon permanente à l'arbre intermédiaire de la boîte de transmission. La machine électrique réversible est ainsi apte à fonctionner en mode générateur de courant pourdiminuer la vitesse de l'arbre intermédiaire ou en mode moteur pour augmenter la vitesse de l'arbre intermédiaire lors des phases transitoires de changement de rapport de vitesse afin de favoriser la synchronisation de la boîte de transmission. Dans ces documents, la machine électrique réversible est toujours liée à l'arbre intermédiaire et génère ainsi un couple de trainée augmentant la consommation de carburant du moteur principal. De plus, en cas de dysfonctionnement de la machine électrique réversible ou lorsque la batterie a atteint sa charge maximale de sorte que l'utilisation de la machine électrique réversible pour freiner l'arbre intermédiaire risquerait de l'endommager, il n'est alors plus possible de freiner l'arbre intermédiaire de la boîte de transmission lors des phases transitoires de changement de rapport de vitesse, ce qui pose notamment de problèmes de sécurité. D'autres systèmes de synchronisation sont connus des documents US 3 478 851 A, JP H07 167278 A et IT 2018 0000 7576 A1.

### Résumé

Une idée à la base de l'invention est de proposer un module pour un système d'entraînement et de synchronisation d'un arbre intermédiaire qui permette de remédier aux inconvénients de l'état de la technique en permettant l'utilisation d'une machine électrique réversible pour synchroniser la boîte de transmission sans augmenter la consommation du moteur principal ni altérer la sécurité du véhicule.

Pour cela, selon un mode de réalisation, l'invention concerne un module pour un système d'entraînement et de synchronisation d'un arbre intermédiaire d'une boîte de transmission, ledit module comprenant :
- un palier destiné à être monté fixe en rotation sur le châssis du véhicule ;
- un dispositif d'accouplement mobile en rotation par rapport au palier comprenant un élément d'entrée destiné à être accouplé en rotation à une machine électrique réversible et un élément de sortie destiné à être accouplé en rotation à l'arbre intermédiaire, le dispositif d'accouplement présentant un état accouplé dans lequel le dispositif d'embrayage est apte à transmettre un couple entre l'élément d'entrée et l'élément de sortie et un état désaccouplé dans lequel l'élément d'entrée et l'élément de sortie sont désaccouplés ; et
- un dispositif de blocage qui présente un état de blocage dans lequel ledit dispositif de blocage bloque en rotation l'élément d'entrée du dispositif d'embrayage par rapport au palier et un état libéré dans lequel ledit dispositif de blocage autorise la rotation de l'élément d'entrée par rapport au palier.

Ainsi, grâce au dispositif d'accouplement, la machine électrique réversible peut être désaccouplée de l'arbre intermédiaire hors des phases transitoires de changement de rapport de vitesse, ce qui permet de réduire la consommation du moteur principal.

En outre, en plaçant le système de blocage à l'état de blocage, le dispositif d'accouplement est susceptible d'agir comme un frein de boîte sans solliciter la machine électrique réversible, notamment en cas de défaillance de la machine électrique réversible ou lorsque la batterie alimentant la machine électrique réversible a atteint sa charge maximale.

Selon d'autres modes de réalisation avantageux, un tel module peut présenter une ou plusieurs des caractéristiques suivantes.

Selon un mode de réalisation, l'élément d'entrée est supporté et guidé en rotation par le palier.

Selon un mode de réalisation, le dispositif de blocage comporte un élément mobile entre une position de blocage dans laquelle ledit élément mobile est en contact avec l'élément d'entrée afin de le bloquer en rotation et une position libérée dans laquelle ledit élément mobile est écarté de l'élément d'entrée afin d'autoriser sa rotation. Ainsi, le blocage est directement réalisé au niveau de l'élément d'entrée, ce qui évite les jeux angulaires entre le point d'application de l'effort de blocage et l'élément d'entrée du dispositif d'embrayage et permet ainsi d'optimiser les performances du dispositif d'accouplement lorsqu'il agit comme frein de boîte, de limiter les bruits indésirables et d'augmenter la fiabilité du système d'entraînement et de synchronisation.

Selon un mode de réalisation, l'élément d'entrée comporte un moyeu d'entrée qui est supporté et guidé en rotation à l'intérieurdu palieret, dans la position de blocage, l'élément mobile est en contact avec le moyeu d'entrée.

Selon un mode de réalisation, le dispositif de blocage comporte une pluralité d'orifices ménagés sur un pourtour externe du moyeu d'entrée et l'élément mobile est un pion qui est monté coulissant dans un alésage ménagé dans le palieretqui présente une extrémité qui est insérée à l'intérieur de l'un des orifices lorsque le pion est dans la position de blocage.

Selon un mode de réalisation, les orifices comportent des chanfreins d'entrée pour faciliter l'insertion du pion dans les orifices dans la position de blocage. Selon un mode de réalisation alternatif ou complémentaire, le pion comporte un chanfrein d'extrémité pour faciliter l'insertion du pion dans l'un des orifices dans la position de blocage.

Selon un mode de réalisation, le dispositif de blocage comporte un organe de rappel configuré pour rappeler l'élément mobile vers la configuration libérée et est raccordé à un circuit pneumatique ou hydraulique de commande qui est configuré pour déplacer l'élément mobile vers la position de blocage. Ceci permet de limiter la consommation énergétique du dispositif de blocage puisque le dispositif de blocage sera le plus souvent à l'état libéré et ne sera à l'état de blocage qu'en de rares occasions.

Selon un autre mode de réalisation, le dispositif de blocage peut comporter une pluralité de dents ménagées sur un pourtour externe du moyeu d'entrée et dans lequel l'élément mobile est un levier articulé autour d'un axe Y parallèle et distant de l'axe de rotation Xde l'arbre intermédiaire et qui présente une extrémité qui est insérée entre deux dents lorsque le levier est dans la position de blocage.

Selon un mode de réalisation, le module comprend outre un train d'engrenage réducteur qui est accouplé à l'élément d'entrée du dispositif d'accouplement et est destiné à accoupler en rotation l'élément d'entrée du dispositif d'accouplement à la machine électrique réversible et, à l'état de blocage, le dispositif de blocage coopère avec un engrenage du train d'engrenage réducteur afin de le bloquer en rotation.

Selon un mode de réalisation, le dispositif d'accouplement est un dispositif d'embrayage humide multidisque. Un tel dispositif d'accouplement présentant des capacités de refroidissement accrues et un fonctionnement silencieux, il est particulièrement adapté pour une utilisation en tant que frein moteur.

Selon un mode de réalisation, l'invention concerne également un système d'entraînement et de synchronisation d'un arbre intermédiaire d'une boîte de transmission comportant un module précité et une machine électrique réversible comportant un rotor qui est accouplé à l'élément d'entrée du dispositif d'accouplement.

Selon un mode de réalisation, le rotorde la machine électrique réversible est accouplé à l'élément d'entrée du dispositif d'accouplement parun train d'engrenage réducteur.

Selon un mode de réalisation, l'invention concerne également un ensemble de transmission comportant une boîte de transmission qui comprend un arbre primaire destiné à être relié à un moteur principal, un arbre secondaire destiné à être relié aux roues motrices d'un véhicule et un arbre intermédiaire apte à être accouplé à l'arbre de sortie et à l'arbre d'entrée par des trains d'engrenage, l'ensemble de transmission comportant en outre un système d'entraînement et de synchronisation précité, l'élément de sortie du dispositif d'accouplement étant accouplé en rotation à l'arbre intermédiaire.

Selon un mode de réalisation, l'invention concerne également un véhicule comportant un ensemble de transmission précité, un moteur principal relié à l'arbre primaire par un dispositif d'embrayage et des roues motrices reliées à l'arbre secondaire.

Enfin, selon un mode de réalisation, l'invention concerne un procédé de pilotage d'un système d'entraînement et de synchronisation d'un arbre intermédiaire d'une boîte de transmission, comportant l'étape de déplacer le dispositif de blocage de l'état libéré vers l'état de blocage en réponse à la détection d'un événement critique.

Selon un mode de réalisation, l'évènement critique est représentatif d'un dysfonctionnement de la machine électrique réversible, d'un état de charge d'une batterie alimentant la machine électrique réversible qui est au-dessus d'un seuil de charge maximal, d'une température inférieure à une température minimale d'utilisation de la batterie ou d'une température supérieure à une température maximale d'utilisation de la batterie.

Selon un mode de réalisation, en réponse à une instruction de changement de rapport de vitesse lorsque le dispositif de blocage est à l'état de blocage, l'on pilote le dispositif d'accouplement en fonction d'un signal représentatif d'une consigne de vitesse de rotation de l'arbre intermédiaire de manière que le dispositif d'accouplement applique un couple résistant permettant à l'arbre intermédiaire d'atteindre la consigne de vitesse de rotation de l'arbre intermédiaire.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence auxdessins annexés.
[fig.1] La figure 1 illustre une chaîne de transmission d'un véhicule équipé d'un système d'entraînement et de synchronisation de l'arbre intermédiaire de la boîte de transmission.
[fig.2] La figure 2 est une vue partielle, écorchée, en perspective représentant le dispositif d'embrayage et le dispositif de blocage du système d'entraînement et de synchronisation de la figure 1.
[fig.3] La figure 3 est une vue en coupe du dispositif d'embrayage et du dispositif de blocage de la figure 2.
[fig.4] La figure 4 est une autre vue en coupe du dispositif d'embrayage et du dispositif de blocage de la figure 2 selon un autre plan de coupe.
[fig.5] La figure 5 est une vue de face d'un deuxième mode de réalisation de l'invention.

### Description des modes de réalisation

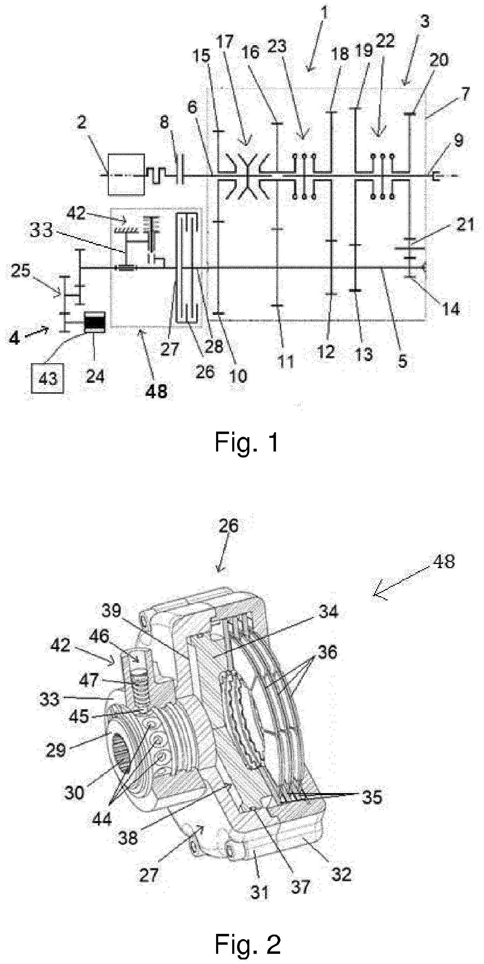

La figure 1 représente une chaîne de transmission 1 d'un véhicule qui comporte un moteur principal 2, par exemple un moteur thermique, une boîte de transmission 3 et un système d'entraînement et de synchronisation 4 d'un arbre intermédiaire 5 de la boîte de transmission 3.

Le moteur principal 2 est relié à un arbre primaire 6 de la boîte de transmission 3 au moyen d'un dispositif d'embrayage 8 de tout type approprié, par exemple un embrayage à glissement. Le dispositif d'embrayage 8 présente un état embrayé dans lequel il est apte à transmettre un couple entre le moteur principal 2 et l'arbre primaire 6 de la boîte de transmission 3 et un état débrayé dans lequel le moteur principal 2 et l'arbre primaire 6 de la boîte de transmission 3 sont désaccouplés.

La boîte de transmission 3 est logée à l'intérieur d'un carter de transmission 7. La boîte de transmission 3 comporte un arbre primaire 6, un arbre intermédiaire 5 et un arbre secondaire 9 qui est destiné à être relié aux roues motrices du véhicule via un différentiel, non représenté. La boîte de transmission 3 comporte des roues dentées intermédiaires 10, 11, 12, 13, 14 qui sont solidarisées en rotation à l'arbre intermédiaire 5. La boîte de transmission 3 comporte également deux roues dentées primaires 15, 16 coaxiales à l'arbre primaire 6 et formant chacune un train d'engrenage avec l'une des roues dentées intermédiaires 10, 11. Un double synchroniseur à trois positions 17 permet d'accoupler l'une ou l'autre des roues dentées primaires 15, 16 à l'arbre primaire 6 et offre une position neutre dans laquelle aucune des roues dentées primaires 15, 16 n'est accouplée à l'arbre primaire 6.

La boîte de transmission 3 comporte également des roues dentées secondaires 18, 19,20 coaxiales à l'arbre secondaire 9. Les roues dentées secondaires 18, 19, 20 forment chacune avec l'une des roues dentées intermédiaires 12, 13, 14 un train d'engrenage. Les engrènements des trains d'engrenage formés par les roues dentées secondaires 18, 19, 20 et les roues dentées intermédiaires 12, 13, 14 sont permanents. L'un des trains d'engrenage présente une roue additionnelle 21 entre l'une des roues secondaires 20 et l'une des roues intermédiaires 14 pour réaliser un rapport de marche arrière permettant d'inverser le sens de rotation de l'arbre secondaire 9. Un accouplement à crabot à trois positions sans synchroniseur 22, positionné entre deux des roues secondaires 19, 20 permet soit d'accoupler à l'arbre secondaire 9 l'une ou l'autre des deuxroues secondaires, 19, 20 soit dans une position neutre de maintenir les roues dentées secondaires 19, 20 désaccouplées de l'arbre secondaire 9.

Dans le mode de réalisation représenté, l'axe de révolution de l'arbre primaire 6 est aligné avec l'axe de révolution de l'arbre secondaire 9. En outre, la roue dentée primaire 16 est disposée à cheval entre une extrémité de l'arbre primaire 6 et une extrémité de l'arbre secondaire 9. Ainsi, ladite roue primaire 16 peut également être utilisée comme roue secondaire en étant accouplée en rotation à l'arbre secondaire 9. A cet effet, un accouplement à crabot à trois positions 23, positionné entre ladite roue primaire 16 et la roue secondaire 18 permet d'accoupler à l'arbre secondaire 9, soit la roue primaire 16 soit la roue secondaire 18 et permet également dans une position neutre de maintenir la roue primaire 16 et la roue secondaire 18 désaccouplées de l'arbre secondaire 9. Une telle boîte de transmission 3 présente ainsi six rapports de marche avant et deux rapports de marche arrière que l'on peut le cas échéant coupler en sortie d'arbre secondaire 9 à un train épicycloïdal (non illustré) afin d'obtenir une boite de transmission à 12 rapports.

Le système d'entraînement et de synchronisation 4 est associé à l'arbre intermédiaire 5 de la boîte de transmission 3 afin de l'entraîner ou de le freiner. Le système d'entraînement et de synchronisation 4 comporte une machine électrique réversible 24 alimentée par une batterie 43, un train d'engrenage réducteur 25 et un dispositif d'accouplement 26.

La machine électrique réversible 24 comporte un stator et un rotor qui est lié au dispositif d'accouplement 26 par le train d'engrenage réducteur 25. Le dispositif d'accouplement 26 présente un état accouplé dans lequel il est apte à transmettre un couple entre la machine électrique réversible 24 et l'arbre intermédiaire 5 et un état désaccouplé dans lequel la transmission du couple entre la machine électrique réversible 24 et l'arbre intermédiaire 5 est interrompue.

Le système d'entraînement et de synchronisation 4 est notamment destiné à être utilisé pendant les phases transitoires de changement de rapport de vitesse de la boîte de transmission 3. En effet, durant ces phases transitoires, la machine électrique réversible 24 peut être utilisée comme moteur électrique pour augmenter la vitesse de rotation de l'arbre intermédiaire 5 ou comme frein électrodynamique pour diminuer la vitesse de rotation de l'arbre intermédiaire 5. Cette adaptation de la vitesse de rotation de l'arbre intermédiaire 5 permet ainsi de diminuer la durée des phases transitoires de changement de rapport de vitesse.

Hors des phases transitoires, la machine électrique réversible 24 peut également être utilisée dans un mode moteur, dans lequel la machine électrique réversible 24 fournit un couple entraînant aux roues. La machine électrique réversible 24 est susceptible d'être utilisée conjointement au moteur principal 2 afin de fournir une puissance supplémentaire pour la traction du véhicule. Dans ce cas, le dispositif d'embrayage 8 est dans la configuration embrayée. Selon un mode de réalisation, la machine électrique réversible 24 peut également être utilisée dans un mode de traction purement électrique du véhicule. Dans un tel mode de fonctionnement, le dispositif d'embrayage 8 est alors dans la configuration débrayée. Par ailleurs, la machine électrique réversible 24 peut également être utilisée, dans un mode générateurde courant, pour recharger la batterie 43.

Hors des phases transitoires et lorsque la machine électrique réversible 24 n'est utilisé ni dans un mode générateurde courant ni en mode moteur, le dispositif d'accouplement 26 est positionné dans l'état désaccouplé de manière à limiter le couple de traînée susceptible d'être généré par la machine électrique réversible 24, ce qui permet ainsi de réduire la consommation de carburant du moteur principal 2.

En relation avec le premier mode de réalisation des figures 2 à 4, on observe un module 48 selon un premier mode de réalisation comprenant un palier 33 monté fixe en rotation sur le châssis du véhicule et un dispositif d'accouplement 26 du système d'entraînement et de synchronisation 4.

Le dispositif d'accouplement 26 comporte un élément d'entrée 27 qui est accouplé à la machine électrique réversible 24 et un élément de sortie 28 (schématisé uniquement sur la figure 1 et non représenté sur les figures 2 à 4) qui est accouplé à l'arbre intermédiaire 5. Dans l'état accouplé, le dispositif d'accouplement 26 est apte à transmettre un couple entre l'élément d'entrée 27 et l'élément de sortie 28. Au contraire, à l'état désaccouplé, la transmission du couple entre l'élément d'entrée 27 et l'élément de sortie 28 est interrompue.

L'élément d'entrée 27 comporte un moyeu d'entrée 29. Le moyeu d'entrée 29 comporte des cannelure internes 30 et est destiné à recevoir une extrémité cannelée d'un arbre, non représenté, qui est accouplé à la machine électrique réversible 24 via le train d'engrenage réducteur 25. Le moyeu d'entrée 29 est supporté et guidé en rotation à l'intérieur d'un palier 33 qui est fixé à un carter de la chaîne de transmission 1, non représenté, destiné à être fixé au châssis du véhicule. Selon une variante de l'invention, le palier 33 peut être un palier lisse. Selon une autre variante de l'invention, un roulement à aiguilles ou à billes peut être intercalé radialement entre le palier 33 et le moyeu d'entrée 29.

Dans le mode de réalisation représenté, le dispositif d'accouplement 26 est un embrayage humide multidisque. L'élément d'entrée 27 comporte deuxdemi-carters 31, 32 fixés l'un à l'autre et définissant ensemble un espace interne dans lequel sont logés un ensemble multidisque qui est destiné à transmettre le couple entre l'élément d'entrée 27 et l'élément de sortie 28 lorsque ledit dispositif d'accouplement 26 est à l'état accouplé, un piston d'actionnement 34 et un fluide hydraulique, tel que de l'huile.

L'ensemble multidisque comporte une pluralité de plateaux35 annulaires, en acier par exemple, qui sont solidaires en rotation de l'élément d'entrée 27 et montés coulissant axialement par rapport à celui-ci. Pour ce faire, chaque plateau 35 comporte sur sa périphérie externe une denture externe qui est en prise avec la denture interne ménagée à l'intérieur d'une jupe cylindrique de l'un des demi-carters 31, 32 de l'élément d'entrée 27. L'ensemble multidisque comporte en outre une pluralité de disques de friction 36 qui sont interposés entre les plateaux 35. Les disques de friction 36 sont solidaires en rotation de l'élément de sortie 28 avec une liberté de translation axiale. Pour ce faire, l'élément de sortie 28 comporte une denture externe et chaque disque de friction 36 comporte, sur sa périphérie interne, une denture interne qui est en prise avec la denture externe de l'élément de sortie 28. Chaque disque de friction 36 comporte des garnitures de friction disposées sur chacune de ses faces, avant et arrière.

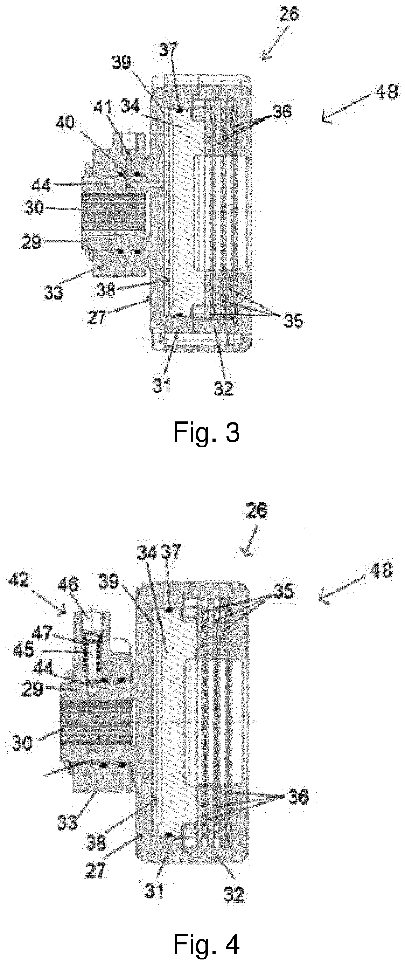

Par ailleurs, le piston d'actionnement 34 est monté mobile axialement à l'intérieur de l'espace interne de l'élément d'entrée 27. Le piston d'actionnement 34 comporte, sur sa périphérie externe, un joint d'étanchéité 37 qui coopère de manière étanche avec la jupe cylindrique du demi-carter 31 de sorte à définir une chambre étanche à volume variable 38 entre le piston d'actionnement 34 et le fond 39 du demi-carter 31. Par ailleurs, le fond 39 du demi-carter 31 présente un canal 40, visible sur la figure 3, qui est raccordé à un circuit hydraulique équipé d'une pompe, non représentée, au moyen d'un canal 41 ménagé dans le palier 33.

Lorsque la chambre étanche à volume variable 38 est alimenté en fluide sous-pression pour déplacer le dispositif d'accouplement 26 vers un état accouplé, le piston d'actionnement 34 se déplace en direction de l'ensemble multidisque de sorte que les disques de friction 36 soient pincés entre les plateaux 35 et que le couple soit ainsi transmis entre l'élément d'entrée 27 et l'élément de sortie 28.

A l'inverse, lorsque le fluide hydraulique est expulsé de la chambre étanche à volume variable 38, le piston d'actionnement 34 s'éloigne de l'ensemble multidisque de sorte que les disques de friction 36 et les plateaux 35 retrouvent une position désaccouplée dans laquelle ils sont écartés axialement les uns des autres.

Par ailleurs, le module 48 comporte en outre un dispositif de blocage 42, notamment visible sur les figures 2 et 4, qui présente un état de blocage dans lequel il bloque en rotation l'élément d'entrée 27 par rapport au palier 33 et un état libéré dans lequel il autorise la rotation de l'élément d'entrée 27par rapport audit palier 33. Ainsi, lorsque le dispositif de blocage 42 est dans l'état de blocage, le dispositif d'accouplement 26 peut être piloté, pendant les phases transitoires de changement de rapport de vitesses de la boîte de transmission 3, pour freiner l'arbre intermédiaire 5. Le dispositif d'accouplement 26 agit alors comme frein de boîte sans solliciter la machine électrique réversible 24. Un tel état de blocage est notamment utilisé, en cas de défaillance de la machine électrique réversible 24 ou lorsque la batterie 43 associée à la machine électrique réversible 24 a atteint sa charge maximale de sorte que l'utilisation de la machine électrique réversible 24 pour freiner l'arbre intermédiaire 5 risquerait d'endommager la batterie 43.

La constitution du module 48 n'est pas limitée à celle du premier mode de réalisation décrit en relation avec les figures 2 à 4. Par exemple, le module 48 peut également comprendre tout ou partie du train d'engrenage réducteur25, le dispositif de blocage 42 pouvant être disposé à n'importe quel point du chemin de transmission du couple entre le rotor de la machine électrique réversible 24 et l'élément d'entrée 27 du dispositif d'accouplement 26.

Ainsi, le dispositif de blocage 42 peut notamment être associé à l'un des engrenages du train d'engrenage réducteur 25, à l'arbre transmettant le couple entre le train d'engrenage réducteur 25 et l'élément d'entrée 27 de l'embrayage ou directement associé à l'élément d'entrée 27 du dispositif d'embrayage, comme c'est le cas dans le mode de réalisation représenté. Cette dernière disposition est particulièrement avantageuse en ce qu'elle permet d'éviter les jeuxangulaires entre le point d'application de l'effort de blocage en rotation exercé par le dispositif de blocage 42 et l'élément d'entrée 27 du dispositif d'embrayage, de telles jeux angulaires étant susceptibles de réduire les performances du dispositif d'accouplement 26 lorsqu'il agit comme frein de boîte, de générer des bruits inconfortables et de détériorer le système d'entraînement et de synchronisation 4.

Dans le mode de réalisation représenté, le dispositif de blocage 42 comporte une pluralité d'orifices 44, visibles sur la figure 2, régulièrement répartis sur le pourtour externe du moyeu d'entrée 29 du dispositif d'embrayage et un pion 45 mobile et apte à être inséré dans l'un desdits orifices 44. Le pion 45 est monté coulissant dans un alésage 46, formé dans le palier 33, entre, d'une part, une position de blocage dans laquelle l'extrémité du pion 45 est insérée dans l'un des orifices 44 et bloque ainsi en rotation l'élément d'entrée 27 et, d'autre part, une position libérée dans laquelle l'extrémité du pion 45 est hors des orifices 44, ce qui autorise la rotation de l'élément d'entrée 27.

Dans le mode de réalisation représenté, afin de faciliter l'insertion du pion 45 à l'intérieur des orifices 44 dans la position de blocage, les orifices 44 comportent des chanfreins d'entrée et le pion 45 comporte un chanfrein d'extrémité, les chanfreins d'entrée et le chanfrein d'extrémité étant configurés pour faciliter l'insertion du pion 45 dans les orifices 44.

Le dispositif de blocage 42 comporte, en outre, un organe de rappel 47, tel qu'un ressort hélicoïdal, qui est disposé entre un épaulement de l'alésage 46 et un épaulement du pion 45 et permet ainsi de rappeler le pion 45 vers la position libérée. Par ailleurs, l'alésage 46 du palier 33 communique avec un circuit hydraulique ou pneumatique, non représenté, équipé d'une pompe permettant d'exercer une pression sur le pion 45 afin de le déplacer et le maintenir dans la position de blocage.

Notons que le dispositif de blocage 42 est décrit ci-dessus, à titre d'exemple, et que l'invention n'est nullement limitée à un dispositif de blocage 42 présentant une telle structure. Ainsi, selon des variantes de réalisation, le déplacement du pion 45 entre la position de blocage et la position libérée est commandé par un actionneur électrique. En outre, selon un autre mode de réalisation, le dispositif de blocage 42 est un dispositif à crabot. Un tel dispositif à crabot comporte, par exemple, un baladeur qui comporte une denture et est fixe en rotation. Le baladeur est mobile axialement entre, d'une part, une position de blocage dans laquelle la denture du baladeur engrène avec une denture complémentaire solidaire en rotation du moyeu d'entrée 29 afin de bloquer en rotation celui-ci et, d'autre part, une position libérée dans laquelle les dentures sont écartées l'une de l'autre afin d'autoriser la rotation du moyeu d'entrée 29.

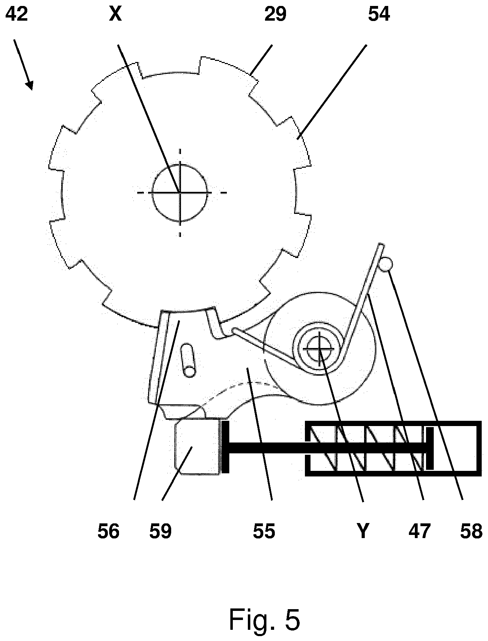

La figure 5 décrit un deuxième mode de réalisation de l'invention, dans lequel le dispositif de blocage 42 comporte une pluralité de dents 54 régulièrement réparties sur le pourtour externe du moyeu d'entrée 29 du dispositif d'embrayage et un levier 55 apte à être inséré entre deux dents 54. Le levier 55 est articulé autour d'un axe Y parallèle et distant de l'axe de rotation X de l'arbre intermédiaire 5, entre, d'une part, une position de blocage dans laquelle l'extrémité du levier 55 est insérée entre deux dents 54 et bloque ainsi en rotation l'élément d'entrée 27 et, d'autre part, une position libérée dans laquelle l'extrémité du levier 55 est en dehors des dents 44, ce qui autorise la rotation de l'élément d'entrée 27.

Dans ce deuxième mode de réalisation représenté, le levier 55 présente une extrémité 56 qui est insérée entre deuxdents 54 lorsque le levier est dans la position de blocage. Afin de faciliter l'insertion du levier 55 entre deuxdents 54 dans la position de blocage, les dents 54 comportent des chanfreins d'entrée et le levier 55 comporte des chanfreins d'extrémité.

Le dispositif de blocage 42 comporte, en outre, un organe de rappel 47, tel qu'un ressort de torsion, qui est disposé entre une butée 58 formée sur le dispositif de blocage 42 et un orifice du levier 55 et permet ainsi de rappeler le levier 55 vers la position libérée. Par ailleurs, le levier 55 est commandé en déplacement à l'aide d'un poussoir 59 permettant d'exercer une pression sur le levier 55 afin de le déplacer et le maintenir dans la position de blocage.

On décrit ci-dessous un procédé de pilotage d'un système d'entraînement et de synchronisation 4, tel que décrit ci-dessus, lors des phases transitoires de changement de rapport de vitesse.

Pendant les phases de transitoires de changement de rapport de vitesse, le système d'entraînement et de synchronisation 4 présente deux modes de fonctionnement alternatifs respectivement désignés, ci-après, mode standard et mode dégradé. Le système d'entraînement et de synchronisation 4 fonctionne en mode standard lorsqu'aucun événement critique représentatif d'un état de fonctionnement de la machine électrique réversible 24 ou de la batterie 43 qui l'alimente n'a été détecté. Il fonctionne au contraire en mode dégradé lorsqu'un tel événement critique a été détecté. L'événement critique correspond, par exemple, à la détection d'un dysfonctionnement de la machine électrique réversible 24 ou à la détection d'un état de charge de la batterie 43 associée à la machine électrique réversible 24 qui est au-dessus d'un seuil de charge maximal.

L'évènement critique peut également correspondre à la détection d'une température inférieure à une température minimale d'utilisation de la batterie ou d'une température supérieure à une température maximale d'utilisation de la batterie.

En mode standard, le dispositif de blocage 42 est dans son état libéré, le dispositif d'accouplement 26 est piloté de manière à ce qu'il reste dans une position accouplée s'il l'était déjà ou qu'il se déplace de la position désaccouplée vers une position accouplée. La machine électrique réversible 24 est commandée en fonction d'un signal représentatif d'une consigne de vitesse de rotation de l'arbre intermédiaire 5.

En réponse à la détection d'un événement critique, le système d'entraînement et de synchronisation 4 bascule en mode dégradé. Le dispositif de blocage 42 est alors déplacé de son état libéré vers son état de blocage. Le dispositif d'accouplement 26 est alors piloté en fonction d'un signal représentatif d'une consigne de vitesse de rotation de l'arbre intermédiaire 5 de sorte que le dispositif d'accouplement 26 applique un couple résistant permettant à l'arbre intermédiaire 5 d'atteindre la consigne de vitesse de rotation de l'arbre intermédiaire 5. Le dispositif d'accouplement26 agit ainsi comme frein de boîte.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention telle que définie par les revendications.

Dans les revendications, tout signe de référence entre parenthèses ne saurait être interprété comme une limitation de la revendication.

## Revendications

1. Module (48) pour un système d'entraînement et de synchronisation (4) d'un arbre intermédiaire (5) d'une boîte de transmission (3), ledit module comprenant :
- un palier (33) destiné à être monté fixe en rotation sur le châssis du véhicule ;
- un dispositif d'accouplement (26) mobile en rotation par rapport au palier (33) comprenant un élément d'entrée (27) destiné à être accouplé en rotation à une machine électrique réversible (24) et un élément de sortie (28) destiné à être accouplé en rotation à l'arbre intermédiaire (5), le dispositif d'accouplement (26) présentant un état accouplé dans lequel le dispositif d'embrayage est apte à transmettre un couple entre l'élément d'entrée (27) et l'élément de sortie (28) et un état désaccouplé dans lequel l'élément d'entrée (27) et l'élément de sortie (28) sont désaccouplés ; et
**caractérisé en ce que** ledit module comprend un dispositif de blocage (42) qui présente un état de blocage dans lequel ledit dispositif de blocage (42) bloque en rotation l'élément d'entrée (27) du dispositif d'embrayage par rapport au palier (33) et un état libéré dans lequel ledit dispositif de blocage (42) autorise la rotation de l'élément d'entrée (27) par rapport au palier (33).

2. Module (48) selon la revendication 1, dans lequel le dispositif de blocage (42) comporte un élément mobile entre une position de blocage dans laquelle ledit élément mobile est en en contact avec l'élément d'entrée (27) afin de le bloquer en rotation et une position libérée dans laquelle ledit élément mobile est écarté de l'élément d'entrée (27) afin d'autoriser sa rotation.

3. Module (48) selon la revendication 2, dans lequel l'élément d'entrée (27) comporte un moyeu d'entrée (29) qui est supporté et guidé en rotation à l'intérieur du palier (33) et dans lequel, dans la position de blocage, l'élément mobile est en contact avec le moyeu d'entrée (29).

4. Module (48) selon la revendication 3, dans lequel le dispositif de blocage comporte une pluralité d'orifices (44) ménagés sur un pourtour externe du moyeu d'entrée (29) et dans lequel l'élément mobile est un pion (45) qui est monté coulissant dans un alésage ménagé dans le palier (33) et qui présente une extrémité qui est insérée à l'intérieur de l'un des orifices (44) lorsque le pion (45) est dans la position de blocage.

5. Module (48) selon la revendication 4, dans lequel les orifices (44) comportent des chanfreins d'entrée et le pion (45) comporte un chanfrein d'extrémité, les chanfreins d'entrée et le chanfrein d'extrémité étant configurés pour faciliter l'insertion du pion dans les orifices (44) dans la position de blocage.

6. Module (48) selon la revendication 3, dans lequel le dispositif de blocage comporte une pluralité de dents (54) ménagées sur un pourtour externe du moyeu d'entrée (29) et dans lequel l'élément mobile est un levier (55) articulé autour d'un axe (Y) parallèle et distant de l'axe de rotation (X) de l'arbre intermédiaire (5) et qui présente une extrémité (56) qui est insérée entre deux dents (54) lorsque le levier (55) est dans la position de blocage.

7. Module (48) selon l'une quelconque des revendications 2 à 6, dans lequel le dispositif de blocage (42) comporte un organe de rappel (47) configuré pour rappeler l'élément mobile vers la configuration libérée et est raccordé à un circuit pneumatique ou hydraulique de commande qui est configuré pour déplacer l'élément mobile vers la position de blocage.

8. Module (48) selon la revendication 1, comprenant en outre un train d'engrenage réducteur (25) qui est accouplé à l'élément d'entrée (27) du dispositif d'accouplement (26) et est destiné à accoupler en rotation l'élément d'entrée (27) du dispositif d'accouplement (26) à la machine électrique réversible (24) et dans lequel à l'état de blocage, le dispositif de blocage (42) coopère avec un engrenage du train d'engrenage réducteur (25) afin de le bloquer en rotation.

9. Module (48) selon l'une quelconque des revendications 1 à 8, dans lequel le dispositif d'accouplement (26) est un dispositif d'embrayage humide multidisque.

10. Système d'entraînement et de synchronisation (4) d'un arbre intermédiaire (5) d'une boîte de transmission (3) comportant un module (48) selon l'une quelconque des revendications 1 à 9 et une machine électrique réversible (24) comportant un rotor qui est accouplé à l'élément d'entrée (27) du dispositif d'accouplement (26).

11. Ensemble de transmission comportant une boîte de transmission (3) qui comprend un arbre primaire (6) destiné à être relié à un moteur principal (2), un arbre secondaire (9) destiné à être relié aux roues motrices d'un véhicule et un arbre intermédiaire (5) apte à être accouplé à l'arbre de sortie et à l'arbre d'entrée par des trains d'engrenage, l'ensemble de transmission comportant en outre un système d'entraînement et de synchronisation (4) selon la revendication 10, l'élément de sortie (28) du dispositif d'accouplement (26) étant accouplé en rotation à l'arbre intermédiaire (5).

12. Véhicule comportant un ensemble de transmission selon la revendication 11, un moteur principal (2) relié à l'arbre primaire (6) par un dispositif d'embrayage (8) et des roues motrices reliées à l'arbre secondaire (9).

13. Procédé de pilotage d'un système d'entraînement et de synchronisation (4) d'un arbre intermédiaire (5) d'une boîte de transmission (3) selon la revendication 10, comportant l'étape de déplacer le dispositif de blocage de l'état libéré vers l'état de blocage en réponse à la détection d'un évènement critique.

14. Procédé de pilotage selon la revendication 13, dans lequel l'évènement critique est représentatif d'un dysfonctionnement de la machine électrique réversible, d'un état de charge d'une batterie (43) alimentant la machine électrique réversible (24) qui est au-dessus d'un seuil de charge maximal, d'une température inférieure à une température minimale d'utilisation de la batterie ou d'une température supérieure à une température maximale d'utilisation de la batterie.

15. Procédé de pilotage selon la revendication 13 ou 14, dans lequel en réponse à une instruction de changement de rapport de vitesse lorsque le dispositif de blocage est à l'état de blocage, l'on pilote le dispositif d'accouplement (26) en fonction d'un signal représentatif d'une consigne de vitesse de rotation de l'arbre intermédiaire (5) de manière que le dispositif d'accouplement (26) applique un couple résistant permettant à l'arbre intermédiaire (5) d'atteindre la consigne de vitesse de rotation de l'arbre intermédiaire (5).

## Patentansprüche

1. Modul (48) für ein System zum Antrieb und zur Synchronisierung (4) einer Zwischenwelle (5) eines Getriebes (3), wobei das Modul umfasst:
- ein Lager (33), das dazu bestimmt ist, drehfest an dem Fahrgestell des Fahrzeugs montiert zu werden;
- eine Kopplungsvorrichtung (26), die in Bezug auf das Lager (33) drehbeweglich ist, umfassend ein Eingangselement (27), das dazu bestimmt ist, an eine reversible elektrische Maschine (24) drehgekoppelt zu werden, und ein Ausgangselement (28), das dazu bestimmt ist, an die Zwischenwelle (5) drehgekoppelt zu werden, wobei die Kopplungsvorrichtung (26) einen gekoppelten Zustand aufweist, in dem die Kupplungsvorrichtung geeignet ist, ein Drehmoment zwischen dem Eingangselement (27) und dem Ausgangselement (28) zu übertragen, und einen entkoppelten Zustand, in dem das Eingangselement (27) und das Ausgangselement (28) entkoppelt sind; und
**dadurch gekennzeichnet, dass** das Modul eine Sperrvorrichtung (42) umfasst, die einen Sperrzustand aufweist, in dem die Sperrvorrichtung (42) das Eingangselement (27) der Kupplungsvorrichtung in Bezug auf das Lager (33) drehsperrt, und einen freigegebenen Zustand, in dem die Sperrvorrichtung (42) die Drehung des Eingangselements (27) in Bezug auf das Lager (33) zulässt.

2. Modul (48) nach Anspruch 1, wobei die Sperrvorrichtung (42) ein Element umfasst, das zwischen einer Sperrposition, in der das mobile Element mit dem Eingangselement (27) in Kontakt ist, um es drehzusperren, und einer freigegebenen Position, in der das mobile Element von dem Eingangselement (27) beabstandet ist, um seine Drehung zuzulassen, mobil ist.

3. Modul (48) nach Anspruch 2, wobei das Eingangselement (27) eine Eingangsnabe (29) umfasst, die im Inneren des Lagers (33) gestützt und drehgeführt wird, und wobei das mobile Element, in der Sperrposition, mit der Eingangsnabe (29) in Kontakt ist.

4. Modul (48) nach Anspruch 3, wobei die Sperrvorrichtung eine Vielzahl von Öffnungen (44) umfasst, die an einem Außenumfang der Eingangsnabe (29) ausgebildet sind, und wobei das mobile Element ein Stift (45) ist, der verschieblich in einer Bohrung montiert ist, die in dem Lager (33) ausgebildet ist, und der ein Ende aufweist, das in das Innere einer der Öffnungen (44) eingeführt ist, wenn der Stift (45) in der Sperrposition ist.

5. Modul (48) nach Anspruch 4, wobei die Öffnungen (44) Eingangsfasen umfassen und der Stift (45) eine Endfase umfasst, wobei die Eingangsfasen und die Endfase dazu ausgestaltet sind, das Einführen des Stifts in die Öffnungen (44) in der Sperrposition zu erleichtern.

6. Modul (48) nach Anspruch 3, wobei die Sperrvorrichtung eine Vielzahl von Zähnen (54) umfasst, die an einem Außenumfang der Eingangsnabe (29) ausgebildet sind, und wobei das mobile Element ein Hebel (55) ist, der um eine Achse (Y) angelenkt ist, die parallel zu und entfernt von der Rotationsachse (X) der Zwischenwelle (5) ist, und der ein Ende (56) aufweist, das zwischen zwei Zähnen (54) eingeführt ist, wenn der Hebel (55) in der Sperrposition ist.

7. Modul (48) nach einem der Ansprüche 2 bis 6, wobei die Sperrvorrichtung (42) ein Rückstellorgan (47) umfasst, das dazu ausgestaltet ist, das mobile Element zu der freigegebenen Konfiguration hin zurückzustellen, und an einen pneumatischen oder hydraulischen Steuerkreis angeschlossen ist, der dazu ausgestaltet ist, das mobile Element zu der Sperrposition hin zu verlagern.

8. Modul (48) nach Anspruch 1, umfassend ferner ein Untersetzungszahnradvorgelege (25), das an das Eingangselement (27) der Kopplungsvorrichtung (26) gekoppelt ist und dazu bestimmt ist, das Eingangselement (27) der Kopplungsvorrichtung (26) an die reversible elektrische Maschine (24) drehzukoppeln, und wobei im Sperrzustand die Sperrvorrichtung (42) mit einem Zahnrad des Untersetzungszahnradvorgeleges (25) zusammenwirkt, um es drehzusperren.

9. Modul (48) nach einem der Ansprüche 1 bis 8, wobei die Kopplungsvorrichtung (26) eine nasslaufende Mehrscheibenkupplungsvorrichtung ist.

10. System (4) zum Antrieb und zur Synchronisierung einer Zwischenwelle (5) eines Getriebes (3), das ein Modul (48) nach einem der Ansprüche 1 bis 9 umfasst und eine reversible elektrische Maschine (24), die einen Rotor umfasst, der an das Eingangselement (27) der Kopplungsvorrichtung (26) gekoppelt ist.

11. Getriebeanordnung, die ein Getriebe (3) umfasst, das eine primäre Welle (6) umfasst, die dazu bestimmt ist, mit einem Hauptmotor (2) verbunden zu werden, eine sekundäre Welle (9), die dazu bestimmt ist, mit den Antriebsrädern eines Fahrzeugs verbunden zu werden, und eine Zwischenwelle (5), die geeignet ist, an die Ausgangswelle und an die Eingangswelle über Zahnradvorgelege gekoppelt zu werden, wobei die Getriebeanordnung ferner ein System zum Antrieb und zur Synchronisierung (4) nach Anspruch 10 umfasst, wobei das Ausgangselement (28) der Kopplungsvorrichtung (26) an die Zwischenwelle (5) drehgekoppelt ist.

12. Fahrzeug, umfassend eine Getriebeanordnung nach Anspruch 11, einen Hauptmotor (2), der mit der primären Welle (6) über eine Kupplungsvorrichtung (8) verbunden ist und Antriebsräder, die mit der sekundären Welle (9) verbunden sind.

13. Verfahren zur Steuerung eines Systems (4) zum Antrieb und zur Synchronisierung einer Zwischenwelle (5) eines Getriebes (3) nach Anspruch 10, umfassend den Schritt, die Sperrvorrichtung aus dem freigegebenen Zustand zu dem Sperrzustand hin als Reaktion auf das Erkennen eines kritischen Ereignisses zu verlagern.

14. Verfahren zur Steuerung nach Anspruch 13, wobei das kritische Ereignis für eine Funktionsstörung der reversiblen elektrischen Maschine, einen Ladezustand einer die reversible elektrische Maschine (24) versorgenden Batterie (43), der über einem maximalen Ladeschwellenwert liegt, eine Temperatur unter einer minimalen Verwendungstemperatur der Batterie oder eine Temperatur über einer maximalen Verwendungstemperatur der Batterie repräsentativ ist.

15. Verfahren zur Steuerung nach Anspruch 13 oder 14, wobei als Reaktion auf eine Gangwechselanweisung, wenn die Sperrvorrichtung in dem Sperrzustand ist, die Kopplungsvorrichtung (26) in Abhängigkeit von einem Signal gesteuert wird, das für einen Drehzahlsollwert der Zwischenwelle (5) repräsentativ ist, so dass die Kopplungsvorrichtung (26) ein Widerstandsmoment aufbringt, das es der Zwischenwelle (5) ermöglicht, den Drehzahlsollwert der Zwischenwelle (5) zu erreichen.

## Claims

1. Module (48) for a system (4) for driving and synchronizing a countershaft (5) of a transmission gearbox (3), said module comprising:
- a bearing part (33) intended to be mounted without the ability to rotate on the chassis of the vehicle;
- a coupling device (26) able to rotate with respect to the bearing part (33) comprising an input element (27) intended to be rotationally coupled to a reversible electric machine (24) and an output element (28) intended to be rotationally coupled to the countershaft (5), the coupling device (26) having a coupled state in which the clutch device is able to transmit torque between the input element (27) and the output element (28) and an uncoupled state in which the input element (27) and the output element (28) are uncoupled; and
**characterized in that** the module comprises a lock-up device (42) which has a lock-up state in which said lock-up device (42) blocks the rotation of the input element (27) of the clutch device with respect to the bearing part (33), and a released state in which said lock-up device (42) allows the input element (27) to rotate with respect to the bearing part (33).

2. Module (48) according to Claim 1, wherein the lock-up device (42) comprises a mobile element able to move between a lock-up position in which said mobile element is in contact with the input element (27) in order to block the rotation thereof, and a released position in which said mobile element is distanced from the input element (27) in order to allow the rotation thereof.

3. Module (48) according to Claim 2, wherein the input element (27) comprises an input hub (29) which is supported and guided in rotation inside the bearing part (33) and wherein, in the lock-up position, the mobile element is in contact with the input hub (29).

4. Module (48) according to Claim 3, wherein the lock-up device comprises a plurality of orifices (44) made on an external perimeter of the input hub (29) and wherein the mobile element is a pin (45) which is mounted with the ability to slide in a bore made in the bearing part (33) and which has an end which is inserted into one of the orifices (44) when the pin (45) is in the lock-up position.

5. Module (48) according to Claim 4, wherein the orifices (44) have chamfered entrances and the pin (45) has a chamfered end, the chamfered entrances and the chamfered end being configured to facilitate insertion of the pin into the orifices (44) in the lock-up position.

6. Module (48) according to Claim 3, wherein the lock-up device comprises a plurality of teeth (54) made on an external perimeter of the input hub (29) and wherein the mobile element is a lever (55) articulated about an axis (Y) parallel to and distant from the axis of rotation (X) of the countershaft (5) and which has an end (56) which is inserted between two teeth (54) when the lever (55) is in the lock-up position.

7. Module (48) according to any one of Claims 2 to 6, wherein the lock-up device (42) comprises a return member (47) configured to return the mobile element to the released position and is connected to a pneumatic or hydraulic operating circuit which is configured to move the mobile element towards the lock-up position.

8. Module (48) according to Claim 1, further comprising a reduction gearset (25) which is coupled to the input element (27) of the coupling device (26) and is intended to rotationally couple the input element (27) of the coupling device (26) to the reversible electric machine (24) and wherein, in the lock-up state, the lock-up device (42) collaborates with a gear of the reduction gearset (25) in order to block the rotation thereof.

9. Module (48) according to any one of Claims 1 to 8, wherein the coupling device (26) is a multidisc wet clutch device.

10. System (4) for driving and synchronizing a countershaft (5) of a transmission gearbox (3) comprising a module (48) according to any one of Claims 1 to 9 and a reversible electric machine (24) comprising a rotor which rotor is coupled to the input element (27) of the coupling device (26).

11. Transmission assembly comprising a transmission gearbox (3) which comprises a primary shaft (6) intended to be connected to a main engine (2), a secondary shaft (9) intended to be connected to the driven wheels of a vehicle, and a countershaft (5) able to be coupled to the output shaft and to the input shaft by gearsets, the transmission assembly further comprising a drive and synchronization system (4) according to Claim 10, the output element (28) of the coupling device (26) being rotationally coupled to the countershaft (5).

12. Vehicle comprising a transmission assembly according to Claim 11, a main engine (2) connected to the primary shaft (6) by a clutch device (8) and driven wheels connected to the secondary shaft (9).

13. Method for controlling a system (4) for driving and synchronizing a countershaft (5) of a transmission gearbox (3) according to Claim 10, comprising the step of moving the lock-up device from the released state to the lock-up state in response to the detection of a critical event.

14. Control method according to Claim 13, wherein the critical event is indicative of a malfunctioning of the reversible electric machine, of a state of charge of a battery (43) that powers the reversible electric machine (24) that is above a maximum charge threshold, of a temperature lower than a minimum temperature of use of the battery or of a temperature higher than a maximum temperature of use of the battery.

15. Control method according to Claim 13 or 14, wherein, in response to an instruction to change the gear ratio when the lock-up device is in the lock-up state, the coupling device (26) is controlled according to a signal representative of a setpoint rotational speed of the countershaft (5) so that the coupling device (26) applies a resistive torque that allows the countershaft (5) to attain the setpoint rotational speed of the countershaft (5) .
